Europäisches Patentamt

European Patent Office

Office européen des brevets

(11) Veröffentlichungsnummer: **0 193 243 B1**

(19)

(12) **EUROPÄISCHE PATENTSCHRIFT**

(45) Veröffentlichungstag der Patentschrift: **29.04.92**

(21) Anmeldenummer: **86200270.6**

(22) Anmeldetag: **21.02.86**

(51) Int. Cl.⁵: **G11B 15/50**, G11B 15/44, G11B 15/665

(54) **Aufzeichnungs- und/oder Wiedergabegerät.**

(30) Priorität: **27.02.85 AT 581/85**

(43) Veröffentlichungstag der Anmeldung:
**03.09.86 Patentblatt 86/36**

(45) Bekanntmachung des Hinweises auf die
Patenterteilung:
**29.04.92 Patentblatt 92/18**

(84) Benannte Vertragsstaaten:
**DE FR GB**

(56) Entgegenhaltungen:
**BE-A- 532 323**
**FR-A- 2 295 517**
**US-A- 3 888 432**

(73) Patentinhaber: **N.V. Philips' Gloeilampenfabrieken**
**Groenewoudseweg 1**
**NL-5621 BA Eindhoven(NL)**

(72) Erfinder: **Aarts, Petrus Johannes Jacobus**
**INT. OCTROOIBUREAU B.V. Prof. Holstlaan 6**
**NL-5656 AA Eindhoven(NL)**
Erfinder: **Huber, Alois**
**INT. OCTROOIBUREAU B.V. Prof. Holstlaan 6**
**NL-5656 AA Eindhoven(NL)**

(74) Vertreter: **Smit, Frederik Jan et al**
**INTERNATIONAAL OCTROOIBUREAU B.V.**
**Prof. Holstlaan 6**
**NL-5656 AA Eindhoven(NL)**

## Beschreibung

Die Erfindung bezieht sich auf ein Aufzeichnungs- und/oder Wiedergabegerät für einen bandförmigen, zwischen zwei rotierend antreibbaren Wickelkernen verlaufenden, wahlweise in einer von zwei Fortbewegungsrichtungen antreibbaren Aufzeichnungsträger mit zwei rotierend antreibbaren Wickeldornen zum Antreiben der beiden koaxial auf dieselben aufgesetzten Wickelkerne, auf die der Aufzeichnungsträger korrespondierend zu seiner Fortbewegungsrichtung wahlweise aufwickelbar ist, und mit einer zum Antreiben der Wickeldorne vorgesehenen Antriebseinrichtung, die ein von einem Motor wahlweise in einer von zwei Drehrichtungen rotierend antreibbares erstes Antriebsrad und ein gegenüber dem ersten Antriebsrad verdrehbares, zu demselben koaxial angeordnetes zweites Antriebsrad aufweist, das vom ersten Antriebsrad über eine zwei Rutschkupplungen aufweisende Kupplungseinrichtung rotierend antreibbar und korrespondierend zu seiner Drehrichtung mit einen von den beiden Wickeldornen in Antriebsverbindung bringbar ist.

Ein solches Gerät ist aus der EP-A- 0 079 053 bekannt. Bei diesem bekannten Gerät wirkt jede der beiden als Filzscheibenkupplungen ausgebildeten Rutschkupplungen immer mit einer Seitenfläche des ersten Antriebsrades zusammen, wobei die eine der beiden Rutschkupplungen immer mit einer Seitenfläche des zweiten Antriebsrades und die andere der beiden Rutschkupplungen immer mit einer Seitenfläche einer mit dem zweiten Antriebsrad unverdrehbar gekoppelten, mit einer Feder belasteten Anpressscheibe zusammenwirkt. Hierdurch sind bei beiden Drehrichtungen des ersten Antriebsrades die beiden Rutschkupplungen immer gleichzeitig und kräftemässig parallel wirksam. Durch das Vorsehen von zwei kräftemässig parallel wirksamen Rutschkupplungen wird erreicht, dass bei einer relativ weichen Kupplungscharakteristik ein relativ grosses Drehmoment übertragbar ist. Dadurch, dass bei beiden Drehrichtungen stets beide Rutschkupplungen gleichzeitig wirksam sind, ist aber bei beiden Drehrichtungen stets nur dasselbe Drehmoment auf das zweite Antriebsrad und von diesem auf die beiden Wickeldorne übertragbar.

Sehr häufig besteht aber das Bedürfnis, die beiden Wickeldorne mit unterschiedlich grossen Drehmomenten anzutreiben, um eine Anpassung an unterschiedliche Reibungseinflüsse durch Führungen und Abtastelemente auf den Aufzeichnungsträger und dadurch bewirkte unterschiedlich grosse Bandspannungen beim Aufwickeln des wahlweise in einer von den beiden Fortbewegungsrichtungen angetriebenen Aufzeichnungsträger auf die beiden Wickelkerne zu erreichen. Hierzu kann jeder Wickeldorn über eine separate mindestens eine Rutschkupplung aufweisende Kupplungseinrichtung angetrieben werden, wobei mit diesen beiden separaten Kupplungseinrichtungen unterschiedlich grosse Drehmomente übertragbar sind. Solche separate Kupplungseinrichtungen sind aber im Hinblick auf Kosten und Raumbedarf ungünstig.

Die Erfindung hat sich zur Aufgabe gestellt, bei einem Gerät eingangs angeführter Gattung auf einfache Weise zu erreichen, dass die beiden Wickeldorne über eine einzige Kupplungseinrichtung mit unterschiedlich grossen Drehmomenten angetrieben werden können. Hierzu ist die Erfindung dadurch gekennzeichnet, dass die Kupplungseinrichtung ein zwischen und koaxial zu den beiden Antriebsrädern angeordnetes, gegenüber denselben verdrehbares Zwischenrad aufweist und das erste Antriebsrad über eine der beiden Rutschkupplungen mit dem Zwischenrad und dieses über die andere der beiden Rutschkupplungen mit dem zweiten Antriebsrad gekuppelt ist, dass die beiden Rutschkupplungen der Kupplungseinrichtung zur Übertragung von unterschiedlich grossen Drehmomenten ausgebildet sind und dass die Kupplungseinrichtung eine Ein-Richtungs-Kupplung aufweist, mit der bei einer von den beiden Drehrichtungen des ersten Antriebsrades das Antriebsrad, das über die Rutschkupplung zur Übertragung des kleineren Drehmomentes mit dem Zwischenrad gekuppelt ist, unter Überbrückung dieser Rutschkupplung mit dem Zwischenrad kuppelbar ist. Auf diese Weise ist erreicht, dass bei einer Drehrichtung des ersten Antriebsrades die Rutschkupplung zur Übertragung des kleineren Drehmomentes von der hierbei eingeschalteten Ein-Richtungs-Kupplung drehfest überbrückt ist und das Durchrutschen bei der Rutschkupplung zur Übertragung des grösseren Drehmomentes auftritt, so dass das bei dieser Drehrichtung von der Kupplungseinrichtung übertragene Drehmoment von der Rutschkupplung zur Übertragung des grösseren Drehmomentes bestimmt ist, also einen grösseren Wert aufweist, und dass bei der entgegengesetzten Drehrichtung des ersten Antriebsrades die Rutschkupplung zur Übertragung des kleineren Drehmomentes von der hierbei ausgeschalteten Ein-Richtungs-Kupplung zum Durchrutschen freigegeben ist, wobei sich dann die Rutschkupplung zur Übertragung des grösseren Drehmomentes wie eine drehfeste Kupplungsverbindung verhält, so dass das bei dieser entgegengesetzten Drehrichtung von der Kupplungseinrichtung übertragene Drehmoment von der Rutschkupplung zur Übertragung des kleineren Drehmomentes bestimmt ist, also einen kleineren Wert aufweist. Damit ist ein Gerät geschaffen, bei dem auf besonders einfache Weise jeder der beiden Wickeldorne mit einem anderen Drehmoment antreibbar ist, wodurch eine Anpassung an unterschiedliche Reibungseinflüsse auf den Aufzeichnungsträger und dadurch bewirkte unterschiedlich grosse Bandspannungen beim Aufwickeln des wahlweise in einer von den beiden Fortbewegungsrichtungen angetriebenen Aufzeichnungsträger auf die Wickelkerne erreicht ist. Hierbei kann das erste Antriebsrad über die Rutschkupplung zur Übertragung des grösseren Drehmomentes mit dem Zwischenrad und dieses über die Rutschkupplung zur Übertragung des kleineren Drehmomentes bzw. die Ein-Richtungs-Kupplung mit dem zweiten Antriebsrad gekuppelt sein. Es ist aber auch möglich, die Kupplungsverbindungen gegeneinander ausgetauscht vorzusehen, wobei dann das erste Antriebsrad über die Rutschkupplung zur Übertragung des kleineren Drehmomentes bzw. die Ein-Richtungs-Kupplung mit dem Zwischenrad und dieses über die Rutschkupplung zur Übertragung des grösseren Drehmomentes mit dem zweiten Antriebsrad gekuppelt ist.

Die Rutschkupplungen können beispielsweise durch Schlingfederkupplungen und die Ein-Richtungs-Kupplung durch eine Klinkenkupplung gebildet sein. Als vorteilhaft hat sich aber erwiesen, wenn jede der beiden Rutschkupplungen durch eine Filzscheibenkupplung mit einer kreisringförmigen Filzscheibe gebildet ist und die Ein-Richtungs-Kupplung durch eine die Filzscheibenkupplung zur Übertragung des kleineren Drehmomentes umfangsseitig umschliessende Klemmkörper-Freilaufkupplung gebildet ist. Auf diese Weise ist eine besonders einfache, preiswerte und kompakte Kupplungseinrichtung erhalten, was hinsichtlich eines geringen Raumbedarfes im Gerät günstig ist.

Die beiden Filzscheibenkupplungen zur Übertragung unterschiedlich grosser Drehmomente können gleich grosse Filzscheiben aufweisen, die aus Filzmaterialien mit unterschiedlich grossen Reibungskoeffizienten bestehen. Hierbei müssen aber dann Massnahmen getroffen werden, um ein Verwechseln der Filzscheiben beim Zusammenbau der Kupplungseinrichtung auszuschliessen, da dies zur Funktionsunfähigkeit der Kupplungseinrichtung führen würde. Als besonders vorteilhaft hat sich daher erwiesen, wenn die kreisringförmigen Filzscheiben der beiden Filzscheibenkupplungen aus demselben Filzmaterial bestehen und sich in mindestens einem von ihren Aussendurchmessern und Innendurchmessern unterscheiden. Hierdurch werden auf einfache Weise Filzscheibenkupplungen zur Übertragung unterschiedlich grosser Drehmomente erhalten, da sich die materialmässig gleichen, kreisringförmigen Filzscheiben in ihrem mittleren, für das übertragbare Drehmoment massgeblichen Durchmesser unterscheiden, wobei zusätzlich aufgrund der unterschiedlichen Abmessungen ein Verwechseln der Filzscheiben beim Zusammenbau der Kupplungseinrichtung praktisch ausgeschlossen ist.

Die Erfindung wird im folgenden anhand eines in den Zeichnungen dargestellten Ausführungsbeispieles näher beschrieben, auf das dieselbe jedoch nicht beschränkt sein soll.

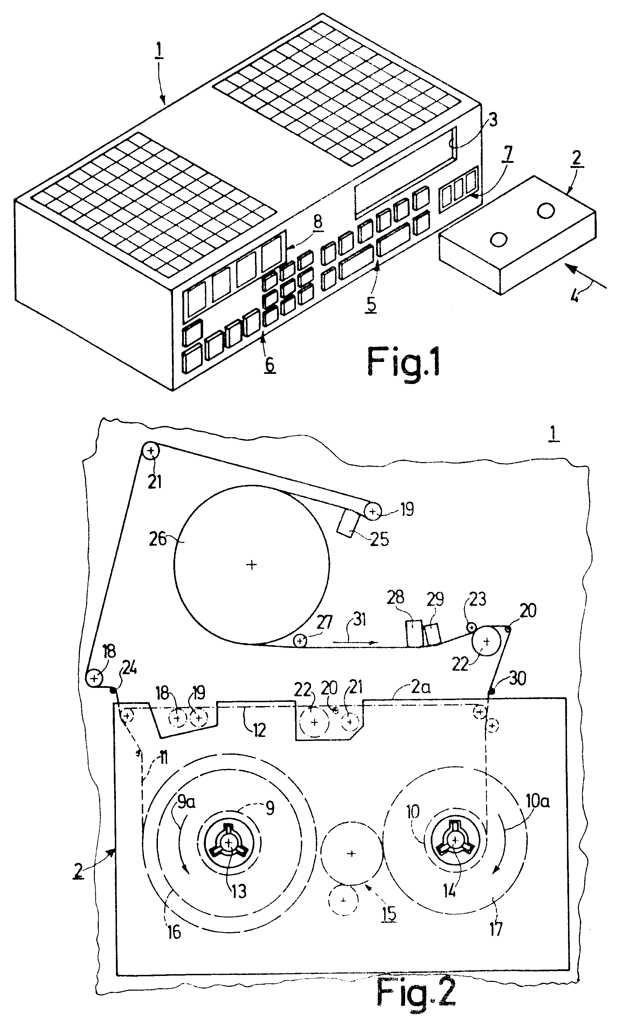

Die Fig. 1 zeigt in einem verkleinerten Masstab schematisch in einer Schrägansicht ein Aufzeichnungs- und/oder Wiedergabegerät für Fernsehsignale und Tonsignale, in das eine Kassette einsetzbar ist, die einen bandförmigen, zwischen zwei nebeneinander liegenden Wickelkernen verlaufenden, magnetisierbaren Aufzeichnungsträger enthält, auf dem Fernsehsignale in schrägen Spuren mit rotierend antreibbaren Magnetköpfen speicherbar bzw. von demselben abtastbar sind.

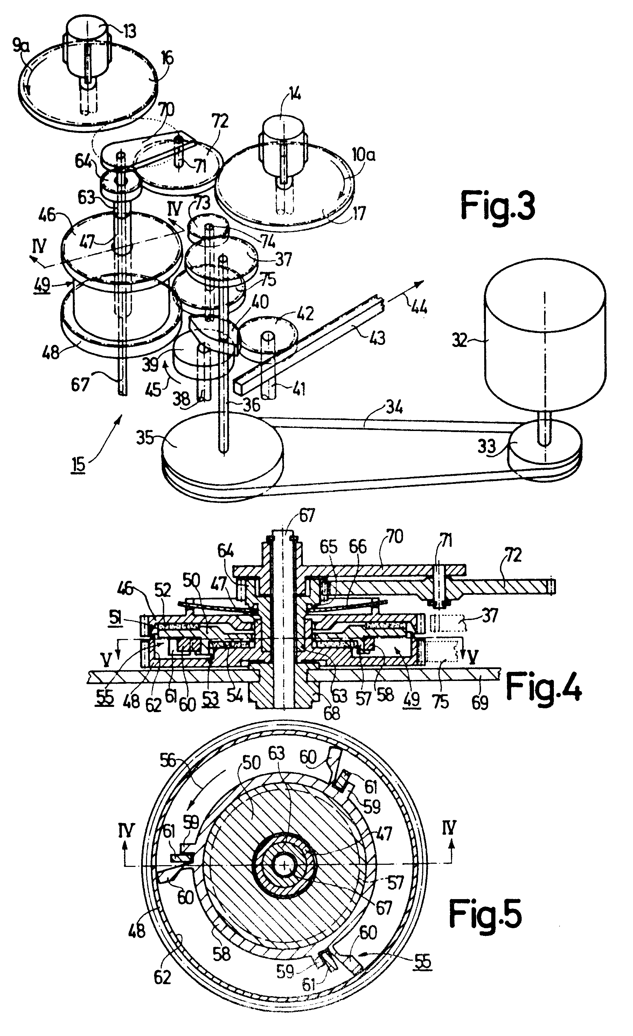

Die Fig. 2 zeigt schematisch einen Teil des Gerätes gemäss Fig. 1 in einem grösseren Masstab als in Fig. 1, wobei eine Kassette in das Gerät eingesetzt ist und der Aufzeichnungsträger aus der Kassette herausgezogen und um Führungs- und Abtastelemente herumgeführt ist.

Die Fig. 3 zeigt in einem etwas grösseren Massstab als in Fig. 2 schematisch in einer Schrägansicht die Antriebseinrichtung des Gerätes gemäss Fig. 1 für die beiden Wickeldorne zum Antreiben der beiden in der Kassette nebeneinander liegenden Wickelkerne, wobei die einzelnen Teile der Antriebseinrichtung in axialer Richtung auseinandergezogen dargestellt sind, um die Deutlichkeit der Zeichnung zu erhöhen.

Die Fig. 4 zeigt in einer etwa zweifachen Vergrösserung in einem Schnitt, der einem Schnitt längs der Linie IV-IV in Fig. 3 entspricht, eine Kupplungseinrichtung der Antriebseinrichtung für die beiden Wickeldorne einer tatsächlichen Ausführungsform, die zum Übertragen von unterschiedlich grossen Drehmomenten bei entgegengesetzten Drehrichtungen ausgebildet ist.

Die Fig. 5 zeigt in einem Schnitt längs der Linie V-V in Fig. 4 eine Ein-Richtungs-Kupplung der Kupplungseinrichtung gemäss Fig. 4.

Die Fig. 1 zeigt ein Aufzeichnungs- und/oder Wiedergabegerät 1, das zum Aufzeichnen und/oder Wiedergeben von Fernsehsignalen und Tonsignalen auf einem bandförmigen, magnetisierbaren Aufzeichnungsträger, im folgenden kurz Magnetband genannt, ausgebildet ist. Das Magnetband ist in einer in Fig. 1 schematisch dargestellten Kassette 2 untergebracht, die zwei nebeneinander liegende Wickelkerne enthält, zwischen denen das Magnetband verläuft, und die durch eine Öffnung 3 hindurch in Richtung des Pfeiles 4 in das Gerät 1 händisch einsetzbar ist. Beim Einsetzen der Kassette 2 in das Gerät wird dieselbe in eine verstellbare Kassettenaufnahme eingeschoben, mit der die Kassette nach dem vollständigen Einsetzen in das Gerät im wesentlichen senkrecht zu den Kassettenhauptwänden in eine in Fig. 2 schematisch angedeutete Betriebslage im Gerät abgesenkt wird.

Zum Einschalten von Betriebsarten des Gerätes, wie "Aufnahme", "Wiedergabe im normalen Vorlauf", "Wiedergabe in normalem Rücklauf", "Schneller Vorlauf", "Schneller Rücklauf", "Wiedergabe bei Bandstillstand", und dgl., weist das Gerät 1 einen ersten Satz 5 von Bedienungstasten auf. Zum Vorprogrammieren des Gerätes und zum Eingeben von weiteren Daten, beispielsweise zum Einstellen einer Tageszeituhr, weist das Gerät einen zweiten Satz 6 von Bedienungstasten auf. Ferner weist das Gerät zwei Anzeigeeinheiten 7 und 8 auf, deren Anzeigestellen beispielsweise je aus sieben Segmenten aufgebaut sind und die beispielsweise zum Anzeigen von Zählwerksständen eines Zählwerkes zum Messen des Bandverbrauchs und zum Anzeigen von Uhrzeiten dienen.

Wie erwähnt, wird eine in das Gerät 1 eingesetzte Kassette 2 in eine Betriebslage abgesenkt. Wie in Fig. 2 schematisch gezeigt ist, treten hierbei mit den beiden nebeneinander liegenden, rotierend antreibbaren Wickelkernen 9 und 10, zwischen denen das Magnetband 11 innerhalb der Kassette 2 entlang dem teilweise durch eine strichpunktierte Linie 12 angegebenen Verlauf verläuft und auf die das Magnetband korrespondierend zu seiner jeweiligen Fortbewegungsrichtung wahlweise und in entgegengesetztem Wickelsinn, wie dies mit den Pfeilen 9a und 10a angegeben ist, zwei Wickeldorne 13 und 14 in Antriebsverbindung, so dass mit den Wickeldornen 13 und 14 die beiden koaxial auf dieselben aufgesetzten Wickelkerne 9 und 10 rotierend antreibbar sind. Die Wickeldorne können selbstverständlich auch anders als dargestellt ausgebildet sein und beispielsweise je einen zentrisch angeordneten Positionierdorn zum Positionieren eines Wickelkernes und einen zu diesem exzentrisch angeordneten Antriebsdorn zum Antreiben eines Wickelkernes aufweisen. Zum Antreiben der beiden Wickeldorne 13 und 14 ist eine in Fig. 2 schematisch angedeutete Antriebseinrichtung 15 vorgesehen, die wahlweise mit einem von zwei mit den Wickeldornen 13 und 14 drehfest verbundenen Wickeltellern 16 und 17 in Antriebsverbindung bringbar ist, wie nachfolgend noch detailliert beschrieben ist.

Beim Absenken der Kassette in ihre Betriebslage wird ein an der Stirnseite 2a vorgesehener, nicht dargestellter Kassettenverschlussdeckel geöffnet, wodurch eine Kassettenöffnung in der Stirnseite 2a freigegeben wird, und treten vier Bandführungen 18, 19, 20 und 21 und eine Andruckrolle 22, die sich hierbei je in einer mit strichpunktierten Linien dargestellten Ruhelage befinden, in zwei Ausnehmungen der Kassette ein, wobei sie den entlang der strichpunktierten Linie 12 verlaufenden Abschnitt des Magnetbandes 11 hintergreifen. Nach erfolgtem Absenken der Kassette in ihre Betriebslage sind die Bandführungen 18, 19, 20 und 21 je in ihre in Fig. 2 mit vollen Linien dargestellte Betriebslage verstellbar, wobei auch die Andruckrolle 22 in eine in Fig. 2 nicht dargestellte Zwischenlage in unmittelbarer Nähe der Bandantriebswelle 23 verstellbar ist. Dabei wird das Magnetband durch die Kassettenöffnung in der Stirnseite 2a der Kassette 2 hindurch aus derselben herausgeführt. Aus der Zwischenlage ist die Andruckrolle 22 in ihre in Fig. 2 dargestellte Betriebslage verstellbar, in der sie das Magnetband 11 an die Bandantriebswelle 23 andrückt. Da die Einrichtungen zum Öffnen des Kassettenverschlussdeckels, zum Verstellen der Bandführungen und der Andruckrolle und zum Andrücken der Andruckrolle an die Bandantriebswelle für die vorliegende Erfindung nicht wesentlich sind, sind diese auch der Einfachheit halber nicht dargestellt. Derartige Einrichtungen sind an sich aus bestehenden Geräten dieser Art allgemein bekannt.

Nach einer Verstellung der Bandführungen 18, 19, 20 und 21 und der Andruckrolle 22 in ihre Betriebslage nimmt das Magnetband 11 den in Fig. 2 mit einer vollen Linie dargestellten Verlauf ein. Dabei erstreckt sich das Magnetband vom Wickelkern 9 über zwei in der Kassette enthaltene Bandführungen, einen Bandspannungsfühler 24, die verstellbaren Bandführungen 18, 21 und 19, einen ortsfesten Magnetkopf 25 zum Löschen aller auf dem Magnetband aufgezeichneten Signale, eine trommelförmige Abtasteinheit 26, die rotierend antreibbare Magnetköpfe zum Aufzeichnen und Wiedergeben von Fernsehsignalen in und aus schräg zur Längsrichtung des Magnetbandes verlaufenden, nebeneinander liegenden Videospuren enthält, eine ortsfeste Bandführung 27, einen ortsfesten Magnetkopf 28 zum Löschen von Tonsignalen in einer in Längsrichtung des Magnetbandes verlaufenden Tonspur, einen weiteren ortsfesten Magnetkopf 29 zum Aufzeichnen und Wiedergeben von Tonsignalen in der Tonspur und zum Aufzeichnen und Wiedergeben von Synchronisationssignalen in einer in Längsrichtung des Magnetbandes und parallel neben der Tonspur verlaufenden Synchronspur, die Bandantriebswelle 23, an die das Magnetband 11 mit der Andruckrolle 22 angedrückt ist, die verstellbare Bandführung 20, eine ortsfeste Bandführung 30 und zwei weitere in der Kassette enthaltene Bandführungen bis zum Wickelkern 10.

Die Bandantriebswelle 23, die in üblicher Weise mit einer nicht dargestellten Schwungscheibe verbunden ist, ist wahlweise in einer von beiden Drehrichtungen mit konstanter Drehzahl antreibbar. Auf diese Weise ist bei an die Bandantriebswelle 23 angedrückter Andruckrolle 22 das Magnetband 11 wahlweise in einer von zwei zueinander entgegengesetzten Fortbewegungsrichtungen mit konstanter Fortbewegungsgeschwindigkeit antreibbar. Beim Antreiben der Bandantriebswelle 23 mit vorgegebener Drehzahl entgegen dem Uhrzeigersinn wird das Magnetband 11 in Richtung des Pfeiles 31 angetrieben, was dem sogenannten "Normalen Vorlauf" entspricht, bei dem das Aufzeichnen der Signale und auch die normale Wiedergabe derselben erfolgt. Wenn die Bandantriebswelle 23 mit gleicher Drehzahl, aber im Uhrzeigersinn angetrieben wird, dann wird das Magnetband 11 entgegen der Richtung des Pfeiles 31 angetrieben, was dem sogenannten "Normalen Rücklauf" entspricht, der auch als "Reverse-Lauf" bezeichnet wird, bei dem eine Wiedergabe der Fernsehsignale zur Erzeugung von rückläufigen Bewegungsabläufen erfolgt.

Wenn das Magnetband 11 im "Normalen Vorlauf" von der mit der Andruckrolle 22 zusammenwirkenden Bandantriebswelle 23 in Richtung des Pfeiles 31 angetrieben wird, dann wird die Antriebseinrichtung 15 mit dem Wickelteller 17 zum Antreiben des Wickeldornes 14 und damit des Wickelkernes 10 in Antriebsverbindung gebracht, um das Magnetband 11 auf den Wickelkern 10 aufzuwickeln, wie dies in den Fig. 2 und 3 gezeigt ist. Wenn das Magnetband 11 im "Reverse-Lauf" von der mit der Andruckrolle 22 zusammenwirkenden Bandantriebswelle 23 entgegen der Richtung des Pfeiles 31 angetrieben wird, dann wird die Antriebseinrichtung 15 mit dem Wickelteller 16 zum Antreiben des Wickeldornes 13 und damit des Wickelkernes 9 in Antriebsverbindung gebracht, um das Magnetband 11 auf den Wickelkern 9 aufzuwickeln, wie dies in Fig. 3 mit einer punktierten Linie angedeutet ist. Bei vorliegendem Gerät wirken beim "Normalen Vorlauf" auf den zwischen der Bandantriebswelle 23 und dem Wickelkern 10 verlaufenden Bandabschnitt und beim "Reverse-Lauf" auf den zwischen der Bandantriebswelle 23 und dem Wickelkern 9 verlaufenden Bandabschnitt unterschiedlich grosse Reibungskräfte ein. Dies deshalb, weil mit dem erstgenannten Bandabschnitt nur vier Bandführungen zusammenwirken, wogegen mit dem zweitgenannten Bandabschnitt sieben Bandführungen, drei feststehende Magnetköpfe und die trommelförmige Abtasteinrichtung zusammenwirken. Aufgrund der unterschiedlich grossen Reibungskräfte ist es zur Erzielung eines stets einwandfreien Aufwickelns des Magnetbandes auf den betreffenden Wickelkern bei an sich möglichst geringen Leistungsaufwand vorteilhaft, den Wickeldorn 14 im "Normalen Vorlauf" mit einem vorgegebenen ersten Drehmoment und den Wickeldorn 13 im "Reverse-Lauf" mit einem vorgegebenen zweiten, gegenüber dem ersten Drehmoment grösseren Drehmoment anzutreiben, wodurch eine Anpassung an die unterschiedlichen Bandbelastungen erreicht wird. Dies wird in einfacher Weise mit der Antriebseinrichtung 15 erreicht, wie nachfolgend noch detailiert beschrieben ist.

Wie erwähnt, sind im Gerät 1 auch die Betriebsarten "Schneller Vorlauf" und "Schneller Rücklauf" einschaltbar, wobei das Magnetband mit erhöter Fortbewegungsgeschwindigkeit zwischen den Wickelkernen 9 und 10 umgespult wird. Dieses Umspulen erfolgt in üblicher Weise bei von der Bandantriebswelle 23 abgehobener Andruckrolle 22. Beispielsweise kann hierbei die Andruckrolle 22 in ihre Zwischenstellung verstellt werden, jedoch die verstellbaren Bandführungen 18, 19, 20 und 21 je in ihrer Betriebslage festgehalten bleiben. Zum Umspulen kann aber durch entsprechende Rückverstellung der verstellbaren Bandführungen 18, 19, 20 und 21 und der Andruckrolle 22 das Magnetband auch vollständig in die Kassette zurückgeführt werden, wobei es dann den mit der Linie 12 angegebenen Verlauf einnimmt. Beim Umspulen wirken unabhängig von der Fortbewegungsrichtung des Magnetbandes stets praktisch dieselben Reibungskräfte auf das Magnetband ein, so dass in diesem Fall der Antrieb der beiden Wickeldorne 13 und 14 in beiden Betriebsarten mit demselben Drehmoment erfolgen kann. Auch in diesen beiden Betriebsarten sind die beiden Wickeldorne 13 und 14 von der Antriebseinrichtung 15 antreibbar, die in der Betriebsart "Schneller Vorlauf" mit dem Wickelteller 17 und in der Betriebsart "Schneller Rücklauf" mit dem Wickelteller 16 in Antriebsverbindung bringbar ist, was ebenfalls nachfolgend noch beschrieben ist.

Die Antriebseinrichtung 15 ist in Fig. 3 dargestellt, wobei aber die Lagerungen der Wellen in einer gerätefesten Chassisplatte nicht dargestellt sind, um die Zeichnung einfacher zu halten. Die Antriebseinrichtung 15 weist einen in seiner Drehrichtung umkehrbaren Motor 32 auf, mit dem eine erste Riemenscheibe 33 antreibbar ist. Die Riemenscheibe 33 treibt über einen Riemen 34 eine zweite Riemenscheibe 35 an, die über eine Welle 36 mit einem Umschaltzahnrad 37 drehfest verbunden ist. Die Welle 36 ist auf einer um eine Welle 38 verschwenkbaren Scheibe 39 drehbar gelagert, wobei die Welle 36 exzentrisch gegenüber der Welle 38 angeordnet ist. Die Scheibe 39 trägt einen im wesentlichen kreissektorförmigen Zahnscheibenteil 40, der auch von der Welle 36 durchsetzt ist und der an seiner Stirnfläche eine Verzahnung aufweist, die mit einem um eine Welle 41 verdrehbaren Verstellzahnrad 42 ständig in Eingriff steht. Das Verstellzahnrad 42 ist von einer Zahnstange 43 her antreibbar, die ihrerseits von einem Steuermotor über ein Zahnradgetriebe wahlweise in einer von zwei zueinander entgegengesetzten Verschieberichtungen antreibbar ist. Der Steuermotor und das von ihm antreibbare Zahnradgetriebe sind für die Erfindung nicht wesentlich und daher der Einfachheit halber nicht dargestellt. Die in Fig. 3 dargestellten Lagen nehmen die Zahnstange 43, das Verstellzahnrad 42, der Zahnscheibenteil 40 samt der Scheibe 39 sowie das Umschaltzahnrad 37 und die zweite Riemenscheibe 35 in den Betriebsarten "Schneller Vorlauf" und "Schneller Rücklauf" ein. Durch Verschieben der Zahnstange 43 in Richtung des Pfeiles 44 mittels des Steuermotors und des Zahnradgetriebes wird über das Verstellzahnrad 42 der Zahnscheibenteil 40 samt der Scheibe 39 in Richtung des Pfeiles 45 verschwenkt, wobei die zweite Riemenscheibe 35 und das Umschaltzahnrad 37 mitverschwenkt werden, und zwar so lange, bis das Umschaltzahnrad 37 eine Lage erreicht, in der es mit einem ersten Antriebszahnrad 46 der Antriebseinrichtung 15 in Eingriff steht, wonach der Steuermotor automatisch abgeschaltet wird. Diese Lage nimmt das Umschaltzahnrad 37 in den Betriebsarten "Normaler Vorlauf" und "Reserve-Lauf" ein. Das erste Antriebszahnrad 46 ist somit in den Betriebsarten "Normaler Vorlauf" und "Reverse-Lauf" über das Umschaltzahnrad 37 und den Riemenantrieb 33, 34, 35 korrespondierend zur gewählten Drehrichtung des Motors 32 wahlweise in einer von zwei Drehrichtungen antreibbar. Zum Speisen des Motors 32 und zum Umkehren seiner Drehrichtung kann derselbe in einen Diagonalzweig einer üblichen Brückenschaltung aus vier Transistoren aufgenommen sein, wie dies an sich beispielsweise aus der US-A- 3 293 522 oder der DE-A- 30 27 729 bekannt ist. Selbstverständlich kann auch ein Motor verwendet werden, der nur in einer Drehrichtung läuft und der das Umschaltzahnrad 37 und damit das erste Antriebszahnrad 46 über ein Zahnradgetriebe antreibt, wobei in diesem Zahnradgetriebe eine Drehrichtungsumschaltung durchführbar ist, um das Antriebszahnrad 46 wahlweise in einer von zwei Drehrichtungen anzutreiben.

Das erste Antriebszahnrad 46 ist, wie auch aus Fig. 4 ersichtlich ist, auf einer rohrförmigen Hülse 47 drehbar gelagert, die an einem zweiten Antriebszahnrad 48 angeformt ist. Auf diese Weise sind die beiden Antriebszahnräder koaxial zueinander und gegenüber einander verdrehbar gelagert. Zwischen den beiden Antriebszahnrädern 46 und 48 ist eine Kupplungseinrichtung 49 vorgesehen, die in Fig. 3 nur schematisch angedeutet ist und über die das zweite Antriebszahnrad 48 vom ersten Antriebszahnrad 46 in den Betriebsarten "Normaler Vorlauf" und "Reverse-Lauf" antreibbar ist.

Die Kupplungseinrichtung 49 weist ein zwischen und koaxial zu den beiden Antriebszahnrädern 46 und 48 angeordnetes, gegenüber denselben verdrehbares, ebenfalls auf der Hülse 47 drehbar gelagertes Zwischenrad 50 auf. Das erste Antriebszahnrad 46 ist über eine erste Rutschkupplung 51 mit dem Zwischenrad 50 gekuppelt. Die Rutschkupplung 51 ist durch eine Filzscheibenkupplung mit einer an dem Zwischenrad festgeklebten kreisringförmigen Filzscheibe 52 gebildet. Das Zwischenrad 50 ist seinerseits über eine zweite Rutschkupplung 53 mit dem zweiten Antriebszahnrad 48 gekuppelt. Die zweite Rutschkupplung 53 ist ebenfalls durch eine Filzscheibenkupplung mit einer an dem Zwischenrad festgeklebten kreisringförmigen Filzscheibe 54 gebildet. Die kreisringförmigen Filzscheiben 52 und 54 der beiden Filzscheibenkupplungen 51 und 53 bestehen aus demselben Filzmaterial und unterscheiden sich in ihren Aussen- und Innendurchmessern. Auf diese Weise ist erreicht, dass die beiden kreisringförmigen Filzscheiben 52 und 54 einen unterschiedlichen mittleren Durchmesser aufweisen, der bekanntlich für die Grösse des maximal übertragbaren Drehmomentes massgeblich ist. Es sind somit die beiden Rutschkupplungen 51 und 53 der Kupplungseinrichtung 49 zur Übertragung von unterschiedlich grossen Drehmomenten ausgebildet, wobei im vorliegenden Fall aufgrund der Durchmesserverhältnisse die Rutschkupplung 51 das grössere Drehmoment und die Rutschkupplung 53 das kleinere Drehmoment überträgt.

Ferner weist die Kupplungseinrichtung 49 eine Ein-Richtungs-Kupplung 55 auf, mit der bei einer von den beiden Drehrichtungen des ersten Antriebszahnrades 46 und damit der gesamten Kupplungseinrichtung 49, in vorliegendem Fall bei der in Fig. 5 mit dem Pfeil 56 angegebenen Drehrichtung entgegen dem Uhrzeigersinn, das zweite Antriebszahnrad 48, das über die Rutschkupplung 53 zur Übertragung des kleineren Drehmomentes mit dem Zwischenrad 50 gekuppelt ist, unter Überbrückung dieser Rutschkupplung 53 drehfest mit dem Zwischenrad 50 kuppelbar ist. Die Ein-Richtungs-Kupplung 55 ist hierbei durch eine die Filzscheibenkupplung 53 zur Übertragung des kleineren Drehmomentes umfangsseitig umschliessende Klemmkörper-Freilaufkupplung gebildet, deren Klemmkörper durch schwenkbare Klemmbacken gebildet sind und deren Aufbau aus Fig. 5 deutlich ersichtlich ist. Diese Freilaufkupplung besteht aus einem auf eine ringförmige Erhebung 57 des Zwischenrades 50 aufgesetzten, aus elastischem Material, wie etwa Gummi, bestehenden Ringkörper 58, von dem in radialer Richtung drei gleichmässig winkelversetzte Paare von kurzen Fortsätzen 59 und langen Fortsätzen 60 abstehen. Zwischen jedes Paar von Fortsätzen 59 und 60 ragt ein vom Zwischenrad 50 in axialer Richtung zum zweiten Antriebszahnrad hin abstehender Lappen 61, der den Ringkörper 58 gegen Verdrehen sichert. Die langen Fortsätze 60 bilden hierbei die schwenkbaren Klemmbacken der Freilaufkupplung. Sie ragen mit ihren freien Enden bis an eine umfangsseitig geschlossene innere Begrenzungswand 62 des zweiten Antriebszahnrades 48 und sind in Umfangsrichtung verschwenkbar. Wenn das Zwischenrad 50 entgegen der Richtung des Pfeiles 56 im Uhrzeigersinn angetrieben wird, dann knicken die langen Fortsätze 60 ab, wie dies in Fig. 5 gezeigt ist und gleiten mit ihren freien Enden über die Begrenzungswand 62, ohne eine Kupplung zwischen dem Zwischenrad 50 und dem zweiten Antriebszahnrad 48 herzustellen. Wird hingegen das Zwischenrad 50 in Richtung des Pfeiles 56 entgegen dem Uhrzeigersinn angetrieben, dann werden die langen Fortsätze 60 durchgestreckt und sie legen sich an die Lappen 61 des Zwischenrades 50 an, wobei sich ihre freien Enden an der Begrenzungswand 62 des zweiten Antriebszahnrades 48 verklemmen, so dass dann eine drehfeste Kupplung zwischen dem Zwischenrad 50 und dem zweiten Antriebszahnrad 48 gebildet ist. Selbstverständlich kann anstelle der beschriebenen Freilaufkupplung auch eine Klemmrollen-Freilaufkupplung vorgesehen sein, bei der die Klemmkörper durch drehbare Rollen gebildet sind. Durch die Ausbildung der beiden Rutschkupplungen als Filzscheibenkupplungen und der Ein-Richtungs-Kupplung als Klemmkörper-Freilaufkupplung, die die Filzscheibenkupplung zur Übertragung des kleineren Drehmomentes umfangsseitig umschliesst, ist eine sehr kompakte Kupplungseinrichtung realisiert, wie aus Fig. 4 deutlich ersichtlich ist.

Das zweite Antriebszahnrad 48 ist über seine angeformte Hülse 47 und eine in diese Hülse 47 eingepresste weitere Hülse 63 mit einem Zahnrad 64, an dem die weitere Hülse 63 angeformt ist, drehfest verbunden. An einem ringförmigen Wulst 65 des Zahnrades 64 stützt sich eine zweiarmige Blattfeder 68 ab, die in Fig. 3 nicht dargestellt ist und die mit ihren Federarmen an dem ersten Antriebszahnrad 46 aufliegt und mit ihrer Federkraft die Grösse der mit den beiden Rutschkupplungen 51 und 53 übertragbare Drehmomente bestimmt. Für die Federarme der Blattfeder 66 können hierbei Auflagepunkte am ersten Antriebszahnrad 46 mit unterschiedlichem Niveau in axialer Richtung vorgesehen sein, um eine Einstellung der übertragbaren Drehmomente vornehmen zu können. Das zweite Antriebszahnrad 48 und das damit drehfest verbundene Zahnrad 64 sind auf einer Welle 67 drehbar gelagert, die mittels einer Buchse 68 an einer Chassisplatte 69 festgehalten ist. Am freien Ende der Welle 67 ist ferner ein Hebel 70 schwenkbar gelagert, an dem über eine Welle 71 ein Antriebszahnrad 72 drehbar gelagert ist, das mit dem Zahnrad 64 ständig in Eingriff steht. In Abhängigkeit von der Drehrichtung des Zahnrades 64 wird aufgrund der Trägheits- und Reibungsverhältnisse das mit dem Zahnrad 64 in Eingriff stehende Abtriebszahnrad 72 selbsttätig in entgegengesetzten Richtungen verschwenkt, wobei dasselbe mit einem von den beiden Wickeltellern 16 und 17, die ebenfalls als Zahnräder ausgebildet sind, in Eingriff kommt. Auf diese Weise ist das zweite Antriebszahnrad 48 korrespondierend zu seiner Drehrichtung über das Zahnrad 64 und das Abtriebszahnrad 72 sowie einem der beiden Wickelteller 16 und 17 wahlweise mit einem der beiden Wickeldorne 13 und 14 in Antriebsverbindung bringbar.

Bei der in Fig. 3 dargestellten Lage des Umschaltzahnrades 37, die dasselbe in den Betriebsarten "Schneller Vorlauf" und "Schneller Rücklauf" einnimmt, steht dasselbe einem ersten Zwischengelegezahnrad 73 in Eingriff, das über eine Welle 74 mit einem zweiten Zwischengelegezahnrad 75 drehfest verbunden ist. Das zweite Zwischengelegezahnrad 75 steht mit dem zweiten Antriebszahnrad 48 ständig in Eingriff, so dass in den Betriebsarten "Schneller Vorlauf" und "Schneller Rücklauf" das zweite Antriebszahnrad 48 vom Umschaltzahnrad 37 über die beiden Zwischengelegezahnräder 73 und 75 unter Umgehung des ersten Antriebszahnrades 46 und der Kupplungseinrichtung 49 direkt antreibbar ist.

Im folgenden ist die Funktionsweise der Antriebseinrichtung 15 in der Betriebsart "Normaler Vorlauf" beschrieben, wobei das Umschaltzahnrad 37 mit dem ersten Antriebszahnrad 46 in Eingriff gebracht ist. Hierbei wird die erste Riemenscheibe 33 vom Motor 32 entgegen dem Uhrzeigersinn mit vorgegebener Drehzahl angetrieben und diese Drehbewegung über den Riemen 34, die zweite Riemenscheibe 35 und das Umschaltzahnrad 37 auf das erste Antriebszahnrad 46 übertragen, das dann im Uhrzeigersinn rotiert. Das erste Antriebszahnrad 46 treibt über die erste Rutschkupplung 51 das Zwischenrad 50 und dieses über die zweite Rutschkupplung 53 das zweite Antriebszahnrad 48 an, wobei die Ein-Richtungs-Kupplung 55 ausgeschaltet bleibt. In diesem Fall tritt das Durchrutschen bei der Rutschkupplung 53 zur Übertragung des kleineren Drehmomentes auf, wobei sich die andere Rutschkupplung 51 zur Übertragung des grösseren Drehmomentes wie eine drehfeste Kupplungsverbindung verhält. Das übertragene Drehmoment ist somit durch die Rutschkupplung 53 zur Übertragung des kleineren Drehmomentes bestimmt und weist somit einen kleineren Wert auf. Das auf das zweite Antriebszahnrad 48 übertragene Drehmoment wird über die Hülse 47 und die Hülse 63 auf das Zahnrad 64 und von diesem auf das Abtriebszahnrad 72 übertragen, das dabei entgegen dem Uhrzeigersinn rotiert. Aufgrund dieser Rotation wird das Abtriebszahnrad 72 selbsttätig zum Wickelteller 17 hin verschwenkt und mit diesem in Eingriff gebracht, wodurch der Wickelteller 17 und damit der Wickeldorn 14 und der Wickelkern 10 entsprechend dem mit der Rutschkupplung 53 übertragenen kleineren Drehmoment angetrieben wird.

In der Betriebsart "Reverse-Lauf" wird die erste Riemenscheibe 33 vom Motor 32 mit derselben Drehzahl wie in der Betriebsart "Normaler Vorlauf", jedoch im Uhrzeigersinn angetrieben und diese Drehbewegung über den Riemen 34, die zweite Riemenscheibe 35 und das Umschaltzahnrad 37 auf das erste Antriebszahnrad 46 übertragen, welches dann entgegen dem Uhrzeigersinn rotiert. Das erste Antriebszahnrad 46 treibt über die erste Rutschkupplung 51 das Zwischenrad 50 an. In diesem Fall wird dann die Ein-Richtungs-Kupplung 55 eingeschaltet, wobei dieselbe eine drehfeste Verbindung vom Zwischenrad 50 zum zweiten Antriebszahnrad 48 herstellt. In diesem Fall tritt dann das Durchrutschen bei der Rutschkupplung 51 zur Übertragung des grösseren Drehmomentes auf, so dass das übertragene Drehmoment von dieser Rutschkupplung bestimmt ist und somit einen grösseren Wert aufweist. Das auf das zweite Antriebszahnrad 48 übertragene grössere Drehmoment wird von diesem über die Hülse 47 und die Hülse 63 auf das Zahnrad 64 und von diesem auf das Abtriebszahnrad 72 übertragen, das dabei im Uhrzeigersinn rotiert und dadurch selbsttätig mit dem Wickelteller 16 in Eingriff gebracht wird und diesen antreibt. Auf diese Weise wird der Wickeldorn 13 und damit der Wickelkern 9 entsprechend dem mit der Rutschkupplung 51 übertragenen grösseren Drehmoment angetrieben.

Mit Hilfe der Antriebseinrichtung 15, die eine einzige Kupplungseinrichtung 49 zum Antreiben beider Wickeldorne 13 und 14 in den Betriebsarten "Normaler Vorlauf" und "Reverse-Lauf" aufweist, ist somit auf einfache Weise erreicht, dass der Wickeldorn 14 mit einem kleineren Drehmoment und der Wickeldorn 13 mit einem grösseren Drehmoment angetrieben wird. Auf diese Weise ist den unterschiedlichen Reibungseinflüssen in den Betriebsarten "Normaler Vorlauf" bzw. "Reverse-Lauf" auf das Magnetband Rechnung getragen und die Wickeldorne werden wahlweise mit einem solchen Drehmoment angetrieben, dass in den beiden Betriebsarten bei einem möglichst geringen Leistungsaufwand stets für ein einwandfreies Aufwickeln des Magnetbandes auf die von den Wickeldornen angetriebenen Wickelkerne gesorgt ist.

In der Betriebsart "Schneller Vorlauf" wird die erste Riemenscheibe 33 vom Motor 32 ebenso wie in der Betriebsart "Reverse-Lauf" im Uhrzeigersinn, jedoch mit höherer Drehzahl angetrieben. Diese Drehbewegung wird über den Riemen 34 und die zweite Riemenscheibe 35 auf das Umschaltzahnrad 37 und von diesem über das erste Vorgelegezahnrad 73 und das zweite Vorgelegezahnrad 75 direkt auf das zweite Antriebszahnrad 48 und von diesem über die Hülse 47 und die Hülse 63 auf das Zahnrad 64 und von diesem auf das Abtriebszahnrad 72 übertragen, welches dann entgegen dem Uhrzeigersinn rotiert und aufgrund dieser Rotation mit dem Wickelteller 17 in Eingriff gebracht wird und diesen mit höherer Drehzahl antreibt. In der Betriebsart "Schneller Rücklauf" wird die Drehrichtung des Motors 32 gegenüber der Betriebsart "Schneller Vorlauf" umgekehrt, wobei dann über die gleiche Antriebsverbindung wie in der Betriebsart "Schneller Vorlauf" das Abtriebszahnrad 72 im Uhrzeigersinn angetrieben wird, wobei dasselbe dann mit dem Wickelteller 16 in Eingriff kommt und diesen mit höherer Drehzahl antreibt. In den Betriebsarten "Schneller Vorlauf" und "Schneller Rücklauf" werden die beiden Wickeldorne 13 und 14 mit demselben vom Motor bestimmten Drehmoment angetrieben.

Selbstverständlich sind im Rahmen der Erfindung noch eine Reihe von Abwandlungen möglich. Beispielsweise können die Rutschkupplungen und die Ein-Richtungs-Kupplung je als Schlingfederkupplung ausgebildet sein. Auch ist als Ein-Richtungs-Kupplung eine Klinkenkupplung möglich. Auch kann das wahlweise Ineingriffbringen des Abtriebszahnrades mit den Wickeltellern nicht selbsttätig in Abhängigkeit von der Drehrichtung desselben erfolgen, sondern durch eine zwangsweise Verstellung mit einem weiteren Steuermotor oder mit Bedienungstasten vorgenommen werden.

**Patentansprüche**

1. Aufzeichnungs- und/oder Wiedergabegerät (1) für einen bandförmigen, zwischen zwei rotierend antreibbaren Wickelkernen (9, 10) verlaufenden, wahlweise in einer von zwei Fortbewegungsrichtungen antreibbaren Aufzeichnungsträger (11) mit zwei rotierend antreibbaren Wickeldornen (13, 14) zum Antreiben der beiden koaxial auf dieselben aufgesetzten Wickelkerne (9, 10), auf die der Aufzeichnungsträger (11) korrespondierend zu seiner Fortbewegungsrichtung wahlweise aufwickelbar ist, und mit einer zum Antreiben der Wickeldorne (13, 14) vorgesehenen Antriebseinrichtung (15), die ein von einem Motor (32) wahlweise in einer von zwei Drehrichtungen rotierend antreibbares erstes Antriebsrad (46) und ein gegenüber dem ersten Antriebsrad (46) verdrehbares, zu demselben koaxial angeordnetes zweites Antriebsrad (48) aufweist, das vom ersten Antriebsrad (46) über eine zwei Rutschkupplungen aufweisende Kupplungseinrichtung rotierend antreibbar und korrespondierend zu seiner Drehrichtung mit einem von den beiden Wickeldornen (13, 14) in Antriebsverbindung bringbar ist, dadurch gekennzeichnet, dass die Kupplungseinrichtung (49) ein zwischen und koaxial zu den beiden Antriebsrädern (46, 48) angeordnetes gegenüber denselben verdrehbares Zwischenrad (50) aufweist und das erste Antriebsrad (46) über eine (51) der beiden Rutschkupplungen (51, 53) mit dem Zwischenrad (50) und dieses über die andere (53) der beiden Rutschkupplungen (51, 53) mit dem zweiten Antriebsrad (48) gekuppelt ist, dass die beiden Rutschkupplungen (51, 53) der Kupplungseinrichtung (49) zur Übertragung von unterschiedlich grossen Drehmomenten ausgebildet sind und dass die Kupplungseinrichtung (49) eine Ein-Richtungs-Kupplungs (55) aufweist, mit der bei einer (56) von den beiden Drehrichtungen des ersten Antriebsrades (46) das Antriebsrad (48), das über die Rutschkupplung (53) zur Übertragung des kleineren Drehmomentes mit dem Zwischenrad (50) gekuppelt ist, unter Überbrückung dieser Rutschkupplung (53) mit dem Zwischenrad (50) kuppelbar ist,

2. Gerät nach Anspruch 1, dadurch gekennzeichnet, dass jede der beiden Rutschkupplungen durch eine Filzscheibenkupplung (51, 53) mit einer kreisringförmigen Filzscheibe (52, 54) gebildet ist und dass die Ein-Richtungs-Kupplung durch eine die Filzscheibenkupplung (53) zur Übertragung des kleineren Drehmomentes umfangsseitig umschliessende Klemmkörper-Freilaufkupplung (55) gebildet ist (Fig. 4,5).

3. Gerät nach Anspruch 2, dadurch gekennzeichnet, dass die kreisringförmigen Filzscheiben (52, 54) der beiden Filzscheibenkupplungen (51, 53) aus demselben Filzmaterial bestehen und sich in mindestens einem von ihren Aussendurchmessern und Innendurchmessern unterscheiden (Fig. 4).

## Claims

1. A recording and/or reproducing apparatus (1) for a record carrier (11) in the form of a tape which can be driven selectively in one of two directions of transport between two rotatable reel hubs (9, 10), the apparatus comprising two rotatable winding spindles (13, 14) for driving the two reel hubs (9, 10) which are coaxially mounted on said spindles and which can take up the record carrier (11) in accordance with the selected direction of transport, and a drive mechanism (15) for driving the winding spindles (13, 14), which mechanism comprises a first drive wheel (46) which can be rotated selectively in one of the two directions of rotation by a motor (32) and a second drive wheel (48) which is rotatable relative to and coaxial with said first drive wheel and can be rotated by the first drive wheel (46) via a coupling device comprising two friction couplings to drive one of the two winding spindles (13, 14) depending on its direction of rotation, characterised in that the coupling device (49) comprises an idler wheel (50) which is arranged coaxially between the two drive wheels (46, 48) so as to be rotatable relative to said drive wheels, the first drive wheel (46) being coupled to the idler wheel (50) via one (51) of the two friction couplings (51, 53) and said idler wheel being coupled to the second drive wheel (48) via the other one (53) of the two friction couplings (51, 53), the two friction couplings (51, 53) of the coupling device (49) are adapted to transmit different torques, and the coupling device (49) comprises a unidirectional coupling (55) by means of which in one (56) of the two directions of rotation of the first drive wheel (46) the drive wheel (48), which is coupled to the idler wheel (50) via the friction coupling (53) for the transmission of the smaller torque, can be coupled to the idler wheel (50) so as to bypass said friction coupling (53).

2. An apparatus as claimed in Claim 1, characterised in that each of the two friction couplings is constituted by a felt-disc coupling (51, 53) comprising an annular felt disc (52, 54), and the unidirectional coupling is constituted by a clamping-body freewheel coupling (55) which embraces the circumference of the felt-disc coupling (53) for the transmission of the smaller torque (Figs. 4, 5).

3. An apparatus as claimed in Claim 2, characterised in that the annular felt discs (52, 54) of the two felt-disc couplings (51, 53) are made of the same felt material and have at least different outer diameters or different inner diameters (Fig. 4).

## Revendications

1. Appareil d'enregistrement et/ou de reproduction (1) pour un support d'enregistrement (11) en forme de bande pouvant être entraîné à volonté dans l'un de deux sens de défilement et s'étendant entre deux noyaux de bobines (9, 10) pouvant être entraînés en rotation, comportant deux mandrins de bobinage (13, 14) pouvant être entraînés en rotation en vue de l'entraînement des deux noyaux de bobines (9, 10) placés coaxialement sur ces mandrins, sur lesquels le support d'enregistrement (11) peut être bobiné à volonté d'une manière correspondant à son sens de défilement, et comportant un dispositif d'entraînement (15) prévu pour l'entraînement des mandrins de bobinage (13,14), qui comporte une première roue d'entraînement (46) pouvant être entraînée en rotation par un moteur (32) à volonté dans l'un de deux sens de rotation et une seconde roue d'entraînement (48), coaxiale à la première et pouvant tourner par rapport à celle-ci, qui peut être entraînée en rotation par la première roue d'entraînement (46) par l'intermédiaire d'un dispositif d'embrayage comportant deux embrayages à glissement et qui peut être amenée en liaison d'entraînement, d'une manière correspondant à son sens de rotation, avec un des deux mandrins de bobinage (13, 14), caractérisé en ce que le dispositif d'embrayage (49) comporte une roue intermédiaire (50) installée entre les deux roues d'entraînement (46,48), coaxialement à celles-ci, et pouvant tourner par rapport à elles et la première roue d'entraînement (46) est accouplée par l'intermédiaire d'un (51) des deux embrayages à glissement (51, 53) à la roue intermédiaire (50) et celle-ci est accouplée, par l'intermédiaire de l'autre (53) des deux embrayages à glissement (51, 53) à la seconde roue d'entraînement (48), que les deux embrayages à glissement (51, 53) du dispositif d'embrayage (49) sont conçus pour la transmission de couples de rotation de grandeurs différentes et que le dispositif d'embrayage (49) comporte un accouplement unidirectionnel (55) au moyen duquel, dans un (56) des deux sens de rotation de la première roue d'entraînement (46), la roue d'entraînement (48) qui est accouplée par l'intermédiaire de l'embrayage à glissement (53) à la roue intermédiaire (50) en vue de la transmission du petit couple de rotation, peut être accouplée à la roue intermédiaire (50) avec dérivation de cet embrayage à glissement (53).

2. Appareil suivant la revendication 1, caractérisé en ce que chacun des deux embrayages à glissement est formé par un embrayage à disque de feutre (51, 53) comportant un disque de feutre en forme de couronne (52, 54) et que l'accouplement unidirectionnel est formé par un accouplement à roue libre à organes de blocage (55) enserrant périphériquement l'embrayage à disque de feutre (53) pour la transmission du petit couple de rotation (Fig. 4, 5).

3. Appareil suivant la revendication 2, caractérisé en ce que les disques de feutre en forme de couronne (52, 54) des deux embrayages à disques de feutre (51, 53) sont faits du même feutre et se distinguent l'un de l'autre par au moins un de leurs diamètres extérieur et intérieur (Fig. 4).

Fig.1

Fig.2

Fig.3

Fig.4

Fig.5